# EUROPEAN PATENT SPECIFICATION

(11) **EP 1 494 365 B1**
(45) Date of publication and mention of the grant of the patent: **04.07.2007**
(21) Application number: 04253829.8
(22) Date of filing: 25.06.2004
(51) Int. Cl.: H04B 1/40

(54) **High-frequency transceiver module**
Hochfrequenz-Sende/Empfangs-Modul
Module de réception/transmission à haute fréquence

(30) Priority: 04.07.2003 JP 2003192288
(43) Date of publication of application: 05.01.2005
(73) Proprietor: SEIKO EPSON CORPORATION, Shinjuku-ku Tokyo 163-0811 (JP)
(72) Inventor: Yajima, Aritsugu, c/o Seiko Epson Corporation, Suwa-shi, Nagano-ken 392-8502 (JP); Takada, Yutaka, c/o Seiko Epson Corporation, Suwa-shi, Nagano-ken 392-8502 (JP); Tanaka, Kazuaki, c/o Seiko Epson Corporation, Suwa-shi, Nagano-ken 392-8502 (JP); Watanabe, Toru, c/o Seiko Epson Corporation, Suwa-shi, Nagano-ken 392-8502 (JP); Takagi, Shigekazu, c/o Seiko Epson Corporation, Suwa-shi, Nagano-ken 392-8502 (JP); Inoguchi, Makoto, c/o Seiko Epson Corporation, Suwa-shi, Nagano-ken 392-8502 (JP)
(74) Representative: Sturt, Clifford Mark

(56) References cited:
- WO-A-00/44102
- WO-A-02/35723
- WO-A-02/058239
- MEHTA S ET AL INSTITUTE OF ELECTRICAL AND ELECTRONICS ENGINEERS: "A CMOS dual-band tri-mode chipset for IEEE 802.11a/b/g wireless LAN" 2003 IEEE RADIO FREQUENCY INTEGRATED CIRCUITS (RFIC) SYMPOSIUM. DIGEST OF PAPERS. PHILADELPHIA, PA, JUNE 8 - 10, 2003, IEEE RADIO FREQUENCY INTEGRATED CIRCUITS SYMPOSIUM, NEW YORK, NY : IEEE, US, 8 June 2003 (2003-06-08), pages 427-430, XP010646558 ISBN: 0-7803-7694-3

## Description

The present invention relates to a high-frequency module fabricated by modularizing respective circuit elements forming a high-frequency portion, such as a wireless communications device, in a multi-layer substrate.

The document WO 02/35723 A discloses a high-frequency multiband terminal with separate transmit and receive antennas, a band multiplexer in the transmission branch and a band switch in the reception branch.

Wirelessly networked information devices (wireless LAN) are being used recently in homes and offices. A currently most popular wireless LAN uses a 2.4 GHz band as its frequency.

A wireless LAN using the 2.4 GHz band, however, may not be able to handle a volume of communications that is expected to keep increasing, because the usable frequency band is too narrow. Accordingly, the standards for a wireless LAN system using a 5 GHz band have been newly established.

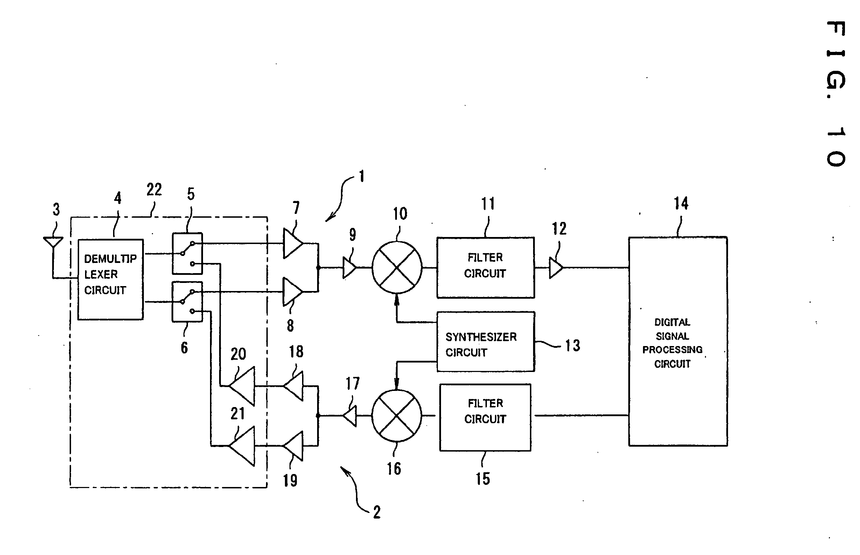

Under these circumstances, a wireless LAN using the 2.4 GHz band and the 5 GHz band may have to be used by a single (common) communications apparatus. An apparatus shown in FIG. 10 has been known as a conventional communications apparatus using two different frequency bands as described above (for example, JP-A-2003-8469).

As is shown in FIG. 10, the conventional communications apparatus includes a reception portion 1 that processes reception signals in two different frequency bands, and a transmission portion 2 that processes transmission signals in two different frequency bands. Transmission and reception can be selected by switching a pair of switching switches 5 and 6 to allow the transmission portion 2 and the reception portion 1 to use a reception/transmission antenna 3 commonly.

To be more specific, a demultiplexer circuit 4, commonly used by the reception portion 1 and the transmission portion 2, is provided between the transmission/reception antenna 3 and the switching switches 5 and 6. The reception portion 1 includes low-noise amplifier circuits 7 and 8, a high-frequency amplifier circuit 9, a mixer circuit (mixer) 10, a filter circuit 11, and an intermediate amplifier circuit 12. The transmission portion 2 includes a filter circuit 15, a mixer circuit 16, a high-frequency amplifier circuit 17, driver circuits 18 and 19, and power amplifier circuits 20 and 21. A synthesizer circuit 13 and a digital signal processing circuit 14 are used commonly by the reception portion 1 and the transmission portion 2.

In the communications apparatus configured as described above, for example, the demultiplexer circuit 4, the switching switches 5 and 6, the power amplifier circuits 20 and 21, etc., all enclosed in a broken line of FIG. 10, are integrated to a single unit in a multi-layer substrate and thereby form a high-frequency module 22.

Incidentally, assume that the high-frequency module 22 used in the conventional communications apparatus described above is adapted to a wireless LAN using the 2.4 GHz band and the 5 GHz band, then two transmission/reception switching switches are used for each frequency band.

However, because the usable frequencies in the wireless LAN are in the 2.4 GHz band and the 5 GHz band, which are quite high, there is a problem that when the switching switches are used, insertion of the switching switches accompanies a considerable power loss.

In order to eliminate this problem and secure the communications quality, the transmission portion needs to increase output power of the power amplifier circuits, whereas the reception portion needs to apply low-noise amplification to reception signals with the use of the low-noise amplifier circuits.

Also, because the switching switches cannot be formed inside the multi-layer substrate, they have to be mounted on the top surface of the multi-layer substrate. Moreover, two switching switches have to be mounted. Hence, the high-frequency module has a problem that not only the area, but also the size of the multi-layer substrate is increased.

In addition, in a wireless LAN using the 2.4 GHz band and the 5 GHz band, the usable frequencies are high and there is a two-fold or more difference. It is thus necessary to use expensive elements, such as gallium arsenide, in order to achieve switching switches using a semiconductor.

On the other hand, a wireless LAN using the 2.4 GHz band and the 5 GHz band has properties as follows: the antenna can be extremely small due to significantly high usable frequencies; there is a two-fold or more difference between the usable frequencies; and transmission power is small.

In view of the foregoing, the advent of a novel high-frequency module having no transmission/reception switching switches is expected for a wireless LAN using the 2.4 GHz band and the 5 GHz band.

The invention therefore has an object to provide a high-frequency module that obviates transmission/reception switching switches, so that not only can a power loss associated with the switching switches be prevented, but also the module can be reduced in size.

In order to solve the above problems and thereby to achieve the above and other objects, the invention is configured as follows.

That is, in a first aspect the invention provides a high-frequency module, which includes: a reception portion that processes a reception signal received by a reception antenna; and a transmission portion that processes a transmission signal to be supplied to a transmission antenna, and is configured in such a manner that: the reception portion includes a first non-switching demultiplexer circuit that divides the reception signal to plural reception lines of which frequency bands are different; the transmission portion includes plural power amplifier circuits that respectively amplify power of transmission signals in different frequency bands, and a second non-switching demultiplexer circuit that supplies outputs of the power amplifier circuits to the transmission antenna; and the first demultiplexer circuit included in the reception portion, and the power amplifier circuits and the second demultiplexer circuit included inside the transmission portion are provided in a multi-layer substrate.

According to this configuration, the transmission/reception switching switches can be omitted. Hence, not only can a power loss associated with the switching switches be prevented, but also the module can be reduced in size at a lower cost.

A second aspect of the invention provides the high-frequency module according to the first aspect, configured in such a manner that: the transmission portion further includes a directional coupling circuit, provided between the power amplifier circuits and the second demultiplexer circuit, to extract part of outputs of the power amplifier circuits; and the directional coupling circuit is provided in the multi-layer substrate.

According to the above configuration, output power can be monitored.

A third aspect of the invention provides the high-frequency module according to the first or second aspect, configured in such a manner that the reception portion includes plural said first demultiplexer circuits, and each of the first demultiplexer circuits demultiplexes the reception.

According to the above configuration, the high-frequency module can be adapted to a communications apparatus of the diversity reception system.

A fourth aspect of the invention provides the high-frequency module according to any of the first through third aspects, configured in such a manner that: the reception portion further includes the reception antenna; and the reception antenna is provided in the multi-layer substrate.

According to the above configuration, a connector that connects the reception antenna to the first demultiplexer circuit can be omitted.

A fifth aspect of the invention provides the high-frequency module according to any of the first through fourth aspects, configured in such a manner that: the transmission portion further includes the transmission antenna; and the transmission antenna is provided in the multi-layer substrate.

According to the above configuration, a connector that connects the transmission antenna and the second demultiplexer circuit can be omitted.

A sixth aspect of the invention provides the high-frequency module according to any of the first through fifth aspects, configured in such a manner that: the reception portion further includes low-noise amplifier circuits, provided to a latter stage of the first demultiplexer circuit, to respectively amplify the reception signals demultiplexed in the first demultiplexer circuit; and the low-noise amplifier circuits are provided in the multi-layer substrate.

According to the above configuration, a subtle reception signal can be received and processed.

A seventh aspect of the invention provides the high-frequency module according to any of the first through fifth aspects, configured in such a manner that: the reception portion further includes unbalanced-to-balanced transformer circuits, provided to a latter stage of the first demultiplexer circuit, to respectively transform unbalanced reception signals demultiplexed in the first demultiplexer circuit to balanced signals; and the unbalanced-to-balanced transformer circuits are provided in the multi-layer substrate.

According to the above configuration, a balanced signal can be outputted to the outside.

An eighth aspect of the invention provides the high-frequency module according to any of the first through seventh aspects, configured in such a manner that: the transmission portion further includes balanced-to-unbalanced transformer circuits, provided to a preceding stage of the power amplifier circuits, to transform inputted balanced signals to unbalanced signals; and the balanced-to-unbalanced transformer circuits are provided in the multi-layer substrate.

According to the above configuration, a balanced signal can be received from the outside and amplified.

A ninth aspect of the invention provides the high-frequency module according to any of the first through eighth aspects, configured in such a manner that the multi-layer substrate comprises a low-temperature co-fired ceramics substrate.

Embodiments of the invention will now be described by way of further example only and with reference to the accompanying drawings, in which:-
FIG. 1 is a block diagram showing the circuitry according to a first embodiment of the invention.
FIG. 2 is a view used to schematically describe an example of the structure of the first embodiment, FIG. 2(A) being a plan view, FIG. 2(B) being a cross section taken along the line A-A, FIG. 2(C) being a cross section taken along the line B-B, and FIG. 2(D) being a right side view.
FIG. 3 is a block diagram showing an example of the configuration in a case where the first embodiment is adapted to a wireless communications apparatus for a wireless LAN.
FIG. 4 is a block diagram showing the circuitry according to a second embodiment of the invention.
FIG. 5 is a block diagram showing the circuitry according to a third embodiment of the invention.
FIG. 6 is a block diagram showing the circuitry according to a fourth embodiment of the invention.
FIG. 7 is a block diagram showing the circuitry according to a fifth embodiment of the invention.
FIG. 8 is a block diagram showing the circuitry according to a sixth embodiment of the invention.
FIG. 9 is a block diagram showing an example of the configuration in a case where the sixth embodiment is adapted to a wireless communications apparatus for a wireless LAN.
FIG. 10 is a block diagram showing the configuration of a conventional apparatus.

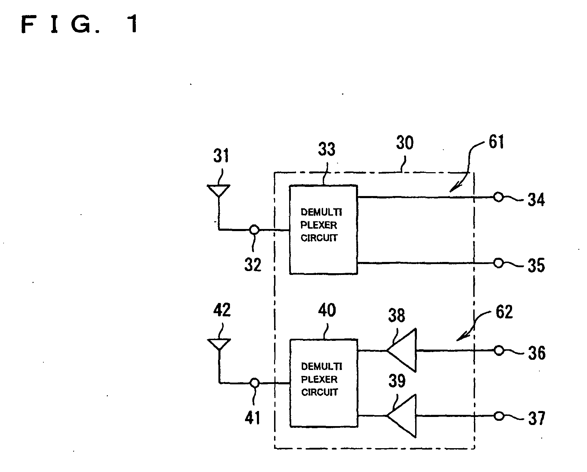

FIG. 1 is a block diagram showing the circuitry of a high-frequency module according to a first embodiment of the invention.

A high-frequency module 30 of the first embodiment is adapted, for example, to a wireless communications apparatus for a wireless LAN, and as is shown in FIG. 1, includes a reception portion 61 that processes a reception signal received at a reception antenna 31, and a transmission portion 62 that processes a transmission signal to be supplied to a transmission antenna 42.

As is shown in FIG. 1, the reception portion 61 includes a reception antenna connection terminal 32, a demultiplexer circuit 33, and reception signal output terminals 34 and 35. Also, as is shown in FIG. 1, the transmission portion 62 includes transmission signal input terminals 36 and 37, power amplifier circuits 38 and 39, a demultiplexer circuit 40, and a transmission antenna connection terminal 41.

Further, the high-frequency module 30 is configured in such a manner that the demultiplexer circuit 33 included in the reception portion 61 as well as the power amplifier circuits 38 and 39 and the demultiplexer circuit 40 included in the transmission portion 62 are provided in a multi-layer substrate, which will be described below.

Respective circuits that together form the high-frequency module 30 will now be described in detail.

The reception antenna connection terminal 32 is a terminal that establishes an electrical connection with the reception antenna 31.

The demultiplexer circuit 33 is a circuit that divides a reception signal received at the reception antenna 31 to two reception lines of which frequency bands are different. The reception signals divided in the demultiplexer circuit 33 are outputted to the outside through the reception signal output terminals 34 and 35.

To be more specific, the demultiplexer circuit 33 comprises two types of band-pass filters, that is, high-pass and low-pass filters, to divide the reception signal received at the reception antenna 31 according to frequency bands. For example, one band-pass filter allows the passing of a reception signal in the 2.4 GHz band at the lower frequency, and the other band-pass filter allows the passing of a reception signal in the 5 GHz band at the higher frequency.

To the power amplifier circuits 38 and 39 are provided transmission signals in different frequency bands, which are inputted to the transmission signal input terminals 36 and 37, respectively.

The power amplifier circuits 38 and 39 are amplifier circuits that amplify the power of transmission signals in different frequency bands, such as the 2.4 GHz band and the 5 GHz band. To be more specific, each of the power amplifier circuits 38 and 39 comprises a high-frequency amplifier semiconductor device and a matching circuit.

The demultiplexer circuit 40 is a circuit that extracts a transmission signal from the power amplifier circuit 38 and a transmission signal from the power amplifier circuit 39, and supplies these signals to the transmission antenna 42.

To be more specific, the demultiplexer circuit 40 comprises two types of band-pass filters, that is, high-pass and low-pass filters, to allow the passing of the transmission signals in different frequency bands outputted from the power amplifier circuits 38 and 39. For example, one band-pass filter allows the passing of a transmission signal in the 2.4 GHz band at the lower frequency from the power amplifier circuit 38, and the other band-pass filter allows the passing of a transmission signal in the 5 GHz band at the higher frequency from the power amplifier circuit 39.

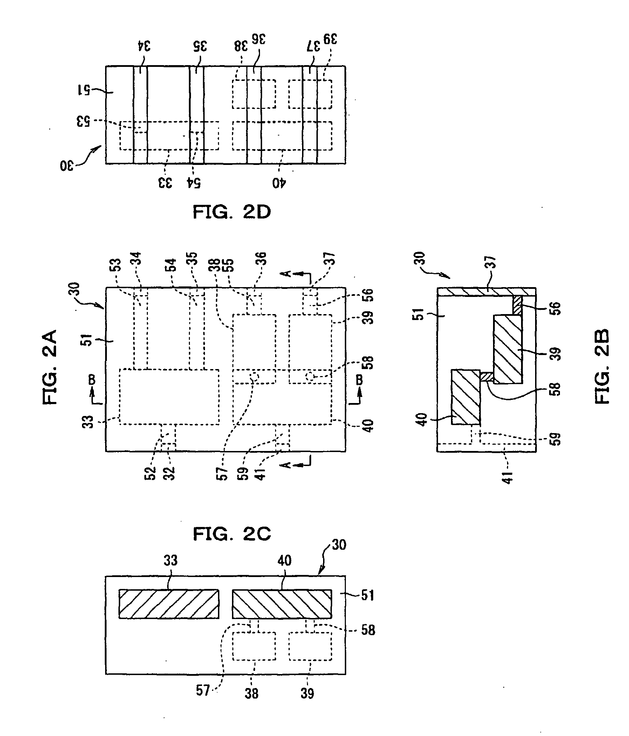

An example of the schematic structure of the high-frequency module of the first embodiment will now be described with reference to FIG. 2.

FIG. 2(A) is a front view of the high-frequency module, FIG. 2(B) is a cross section taken along the line A-A, FIG. 2(C) is a cross section taken along the line B-B, and FIG. 2(D) is a right side view.

The high-frequency module 30 is fabricated by laminating plural dielectric sheets and by forming respective circuit elements and terminals on the inner side or the surface of the multi-layer substrate in such a manner that the circuit elements and terminals are placed at their respective predetermined positions on the inner side or the surface of a multi-layer substrate 51, as is shown in FIG. 2.

That is, as is shown in FIG. 2, in the high-frequency module 30, the demultiplexer circuit 33 shown in FIG. 1 is placed in a portion on the upper side of the interior of the multi-layer substrate 51 having specific thickness and size. Also, the reception antenna connection terminal 32 shown in FIG. 1 is provided to the left side surface of the multi-layer substrate 51 while the reception signal output terminals 34 and 35 shown in FIG. 1 are provided to the right side surface of the multi-layer substrate 51. The reception antenna connection terminal 32 is then electrically connected to the input side of the demultiplexer circuit 33 via a conductor 52 inside the multi-layer substrate 51, and the output sides of the demultiplexer circuit 33 are electrically connected to the reception signal output terminals 34 and 35, respectively, via conductors 53 and 54, respectively, inside the multi-layer substrate 51.

Further, the demultiplexer circuit 40 shown in FIG. 1 is placed in a portion on the upper side of the interior of the multi-layer substrate 51, and the power amplifier circuits 38 and 39 shown in FIG. 1 are placed below the demultiplexer circuit 40 inside the multi-layer substrate 51. Also, the transmission antenna connection terminal 41 shown in FIG. 1 is provided to the left side surface of the multi-layer substrate 51 while the transmission signal output terminals 36 and 37 shown in FIG. 1 are provided to the right side surface of the multi-layer substrate 51.

The transmission signal output terminals 36 and 37 are electrically connected to the input sides of the power amplifier circuits 38 and 39 shown in FIG. 1, respectively, via conductors 55 and 56, respectively, inside the multi-layer substrate 51. Further, the output sides of the power amplifier circuits 38 and 39 are electrically connected to the input sides of the demultiplexer circuit 40, respectively, via conductors 57 and 58, respectively, inside the multi-layer substrate 51, and the output side of the demultiplexer circuit 40 is electrically connected to the transmission antenna connection terminal 41 via a conductor 59 inside the multi-layer substrate 51.

The demultiplexer circuit 33, the power amplifier circuits 38 and 39, and the demultiplexer circuit 40 that together form the high-frequency module are formed inside the multi-layer substrate 51 as is shown in FIG. 2, by forming a metal film or metal wiring on the dielectric sheet followed by lamination, compression bonding, etc.

Resin, such as epoxy, or a ceramic dielectric substance is used as a material of the dielectric sheet. Also, it is preferable to use a low-temperature co-fired ceramics substrate as the multi-layer substrate.

The high-frequency module 30 described above is configured in such a manner that the transmission portion 62 includes the power amplifier circuits 38 and 39; however, the power amplifier circuits 38 and 39 may be omitted when transmission power is relatively small. Such omission is possible in each embodiment described below.

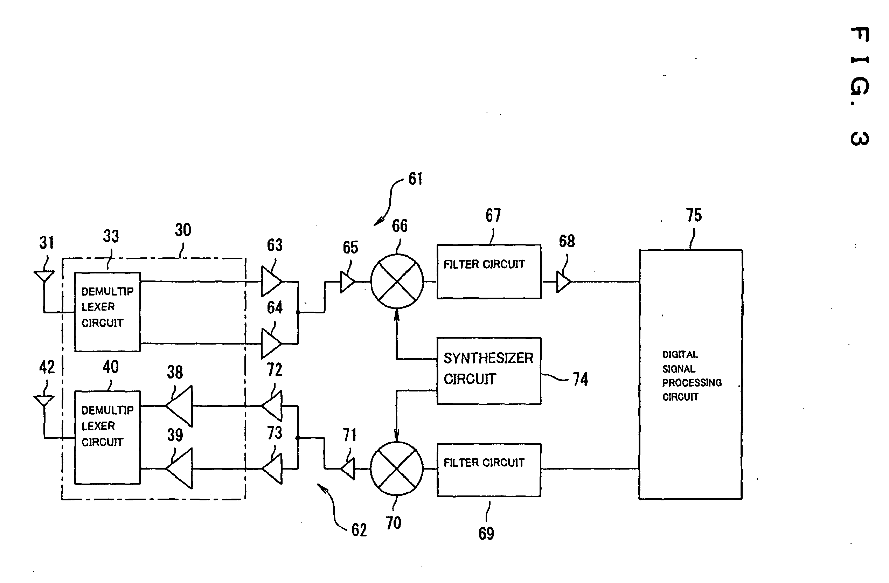

The configuration in a case where the high-frequency module 30 of the first embodiment configured as described above is adapted to a wireless communications apparatus for a wireless LAN will now be described with reference to FIG. 3.

As is shown in FIG. 3, the wireless communications apparatus includes a reception portion 61 and a transmission portion 62, and the high-frequency module 30 forms part of the reception portion 61 and part of the transmission portion 62.

The reception portion 61 is able to process reception signals in both the 2.4 GHz band and the 5 GHz band. The reception portion 61 therefore includes, as is shown in FIG. 3, a reception antenna 31, a demultiplexer circuit 33, low-noise amplifier circuit 63 and 64, a high-frequency amplifier circuit 65, a mixer circuit (mixer) 66, a filter circuit 67, and an intermediate amplifier circuit 68. Hence, in the reception portion 61, a reception signal is demultiplexed to a signal in the 2.4 GHz band and a signal in a 5 GHz band in the demultiplexer circuit 33, which are individually amplified in the corresponding low-noise amplifier circuits 63 and 64 and processed in the common circuits thereafter.

The transmission portion 62 is able to process transmission signals in both the 2.4 GHz band and the 5 GHz band. The transmission portion 62 therefore includes a filter circuit 69, a mixer circuit 70, a high-frequency amplifier circuit 71, driver circuits 72 and 73, power amplifier circuits 38 and 39, a demultiplexer circuit 40, and a transmission antenna 42. Hence, in the transmission portion 62, a transmission signal in the 2.4 GHz band is amplified in the driver circuit 72 and the power amplifier circuit 38, and a transmission signal in the 5 GHz band is amplified in the driver circuit 73 and the power amplifier circuit 39.

A synthesizer circuit 74 and a digital signal processing circuit 75 are used commonly by the reception portion 61 and the transmission portion 62.

As has been described, the high-frequency module of the first embodiment is configured in such a manner that the demultiplexer circuit in the transmission portion and the demultiplexer circuit in the reception portion are provided, which eliminates the need for transmission/reception switching switches. It is thus possible to enhance the circuit performance by preventing a power loss associated with the use of the switching switches.

Also, according to the high-frequency module of the first embodiment, the demultiplexer circuits can be accommodated in the multi-layer substrate because they comprise combined filters. It is thus possible to reduce the multi-layer substrate in size, which in turn makes it possible to reduce the high-frequency module in size.

Further, according to the high-frequency module of the first embodiment, because the respective circuits in the module can be designed at a time, the connection impedance of the respective circuits can be matched in the interior, which enables the optimal characteristic adjustment to be performed for the overall circuit. In other words, it is no longer necessary to provide components to adjust the characteristic from circuit to circuit, and not only can the size be reduced, but also the design steps of the wireless terminal can be shortened, which in turn makes it possible to cut the manufacturing costs.

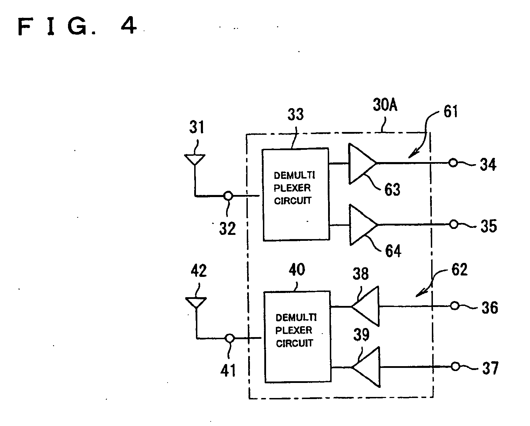

The circuitry of a high-frequency module according to a second embodiment of the invention will now be described with reference to FIG. 4.

A high-frequency module 30A of the second embodiment is based on the high-frequency module 30 shown in FIG. 1, and low-noise amplifier circuits 63 and 64 are additionally provided to the latter stage of the demultiplexer circuit 33.

In other words, as is shown in FIG. 4, the high-frequency module 30A is configured in such a manner that the reception portion 61 includes the reception antenna connection terminal 32, the demultiplexer circuit 33, the low-noise amplifier circuits 63 and 64, and the reception signal output terminals 34 and 35, while the transmission portion 62 includes the transmission signal input terminals 36 and 37, the power amplifier circuits 38 and 39, the demultiplexer circuit 40, and the transmission antenna connection terminal 41.

The structure of the high-frequency module 30A is basically the same as the structure of the high-frequency module 30 shown in FIG. 2. In other words, the high-frequency module 30A is configured in such a manner that the demultiplexer circuit 33 and the low-noise amplifier circuits 63 and 64 included in the reception portion 61 as well as the power amplifier circuits 38 and 39 and the demultiplexer circuit 40 included in the transmission portion 62 are provided inside the multi-layer substrate.

As has been described, the high-frequency module of the second embodiment, by including the low-noise amplifier circuits 63 and 64, becomes able to receive a subtle electric wave.

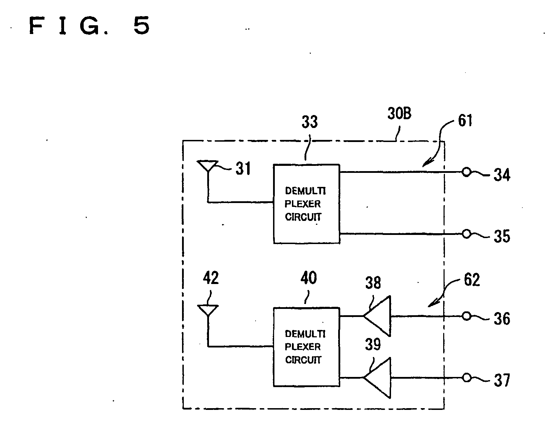

The circuitry of a high-frequency module according to a third embodiment of the invention will now be described with reference to FIG. 5.

The high-frequency module 30 of the first embodiment shown in FIG. 1 is configured in such a manner that the reception portion 61 excludes the reception antenna 31 and the transmission portion 62 excludes the transmission antenna 42, and the both antennas 31 and 42 are connected externally.

Contrary to this, as is shown in FIG. 5, a high-frequency module 30B of the third embodiment is configured in such a manner that the reception portion 61 and the transmission portion 62 include the reception antenna 31 and the transmission antenna 42, respectively, and the both antennas 31 and 42 are placed inside the multi-layer substrate.

As has been described, the high-frequency module of the third embodiment is configured in such a manner that the reception antenna 31 and the transmission antenna 42 are included inside. This eliminates the need for a connection tools between the demultiplexer circuits and the both antennas; moreover, it is possible to achieve the satisfactory high-frequency characteristic by reducing attenuation due to the connections.

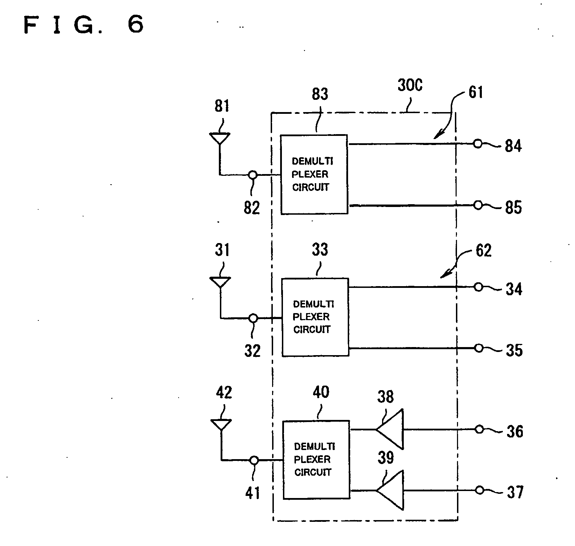

The circuitry of a high-frequency module according a fourth embodiment of the invention will now be described with reference to FIG. 6.

The high-frequency module 30 of the first embodiment shown in FIG. 1 is configured in such a manner that the reception portion 61 supports a single reception antenna 31, and therefore it cannot be adapted to a communications apparatus of the diversity reception system in which plural reception antennas are included.

Hence, as is shown in FIG. 6, a high-frequency module 30C of the fourth embodiment is based on the high-frequency module 30 shown in FIG. 1, and in order to be adapted to the diversity reception system, it is configured in such a manner that the a reception antenna connection terminal 82, a demultiplexer circuit 83, and reception signal output terminals 84 and 85 are added in the reception portion 61.

The functions of the reception antenna connection terminal 82, the demultiplexer circuit 83, the reception signal output terminals 84 and 85 are the same as the functions as the reception antenna connection terminal 32, the demultiplexer circuit 33, the reception signal output terminals 34 and 35 shown in FIG. 1, respectively, and the description thereof is omitted herein.

The configuration of the other portion in the fourth embodiment is the same as the configuration of the first embodiment shown in FIG. 1. Hence, the same components are labeled with same numeral references and the description thereof is omitted.

Further, the high-frequency module 30C is configured in such a manner that the respective circuits and terminals are placed on the inner side or the surface of the multi-layer substrate as are with the high-frequency module 30.

As has been described, because the high-frequency module of the fourth embodiment is able to process reception signals received at plural reception antennas for each antenna, it can be adapted to a communications apparatus of the diversity reception system.

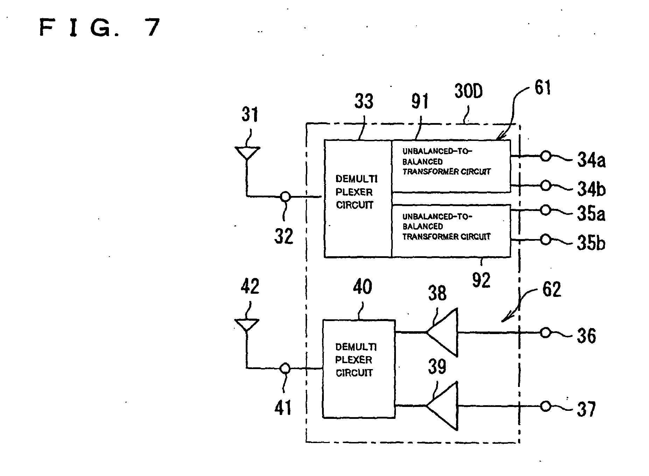

The circuitry of a high-frequency module according to a fifth embodiment of the invention will now be described with reference to FIG. 7.

In the high-frequency module 30 of the first embodiment shown in FIG. 1, a reception signal that can be extracted from the reception signal output terminals 34 and 35 in the reception portion 61 is an unbalanced signal, which makes it impossible to use, as an amplifier circuit in the latter stage, a differential amplifier circuit that receives and amplifies a balanced signal.

Hence, as is shown in FIG. 7, a high-frequency module 30D of the fifth embodiment is based on the high-frequency module 30 shown in FIG. 1, and is configured in such a manner that the reception portion 61 additionally includes unbalanced-to-balanced transformer circuits (baluns) 91 and 92, which transform each of unbalanced signals demultiplexed in the demultiplexer circuit 33 to balanced signals.

Due to this addition, the reception signal output terminals 34 and 35 are replaced with balanced signal output terminals 34a and 34b that extract balanced signals transformed in the unbalanced-to-balanced transformer circuit 91, and the balanced signal output terminals 35a and 35b that extract balanced signals transformed in the unbalanced-to-balanced transformer circuit 92, respectively.

Further, the high-frequency module 30D is configured in such a manner that the respective circuits and terminals are placed on the inner side or the surface of the multi-layer substrate as are with the high-frequency module 30.

As has been described, because the high-frequency module of the fifth embodiment additionally includes the unbalanced-to-balanced transformer circuits 91 and 92, it has an advantage that a differential amplifier circuit that receives and amplifies a balanced signal can be used as the amplifier circuit in the latter stage.

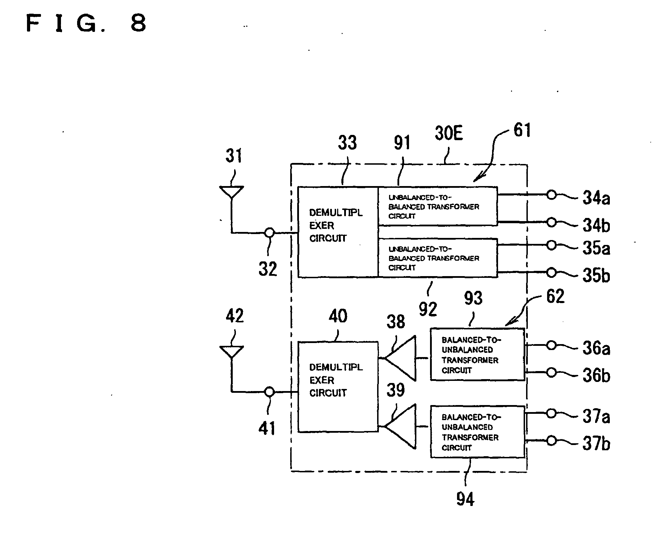

The circuitry of a high-frequency module according to a sixth embodiment of the invention will now be described with reference to FIG. 8.

A high-frequency module 30D of the fifth embodiment shown in FIG. 7 is configured in such a manner that balanced signals are extracted from the balanced signal output terminals 34a and 34b and the balanced signal output terminals 35a and 35b in the reception portion 61, and amplified in the differential amplifier circuits in the latter stage. It should be noted, however, that it is impossible to input balanced signals to the transmission signal input terminals 36 and 37 in the transmission portion 62 as transmission signals from the outside, to be processed.

Hence, as is shown in FIG. 8, a high-frequency module 30E of the sixth embodiment is based on the high-frequency module 30D shown in FIG. 7, and configured in such a manner that the transmission portion 62 additionally includes balanced-to-unbalanced transformer circuits 93 and 94 that transform inputted balanced signals to unbalanced signals and supply these unbalanced signals to the power amplifier circuits 38 and 39.

Also, due to this addition, the transmission signal input terminals 36 and 37 are replaced with balanced signal input terminals 36a and 36b that receive balanced signals to be supplied to the balanced-to-unbalanced transformer circuit 93, and balanced signal input terminals 37a and 37b that receive balanced signals to be supplied to the balanced-to-unbalanced transformer circuit 94, respectively.

Further, the high-frequency module 30E is configured in such a manner that the respective circuits and terminals are placed on the inner side or the surface of the multi-layer substrate as are with the high-frequency module 30D.

As has been described, because the high-frequency module of the sixth embodiment additionally includes the balanced-to-unbalanced transformer circuits 93 and 94, balanced signals can be supplied to the power amplifier circuits 38 and 39 from the outside.

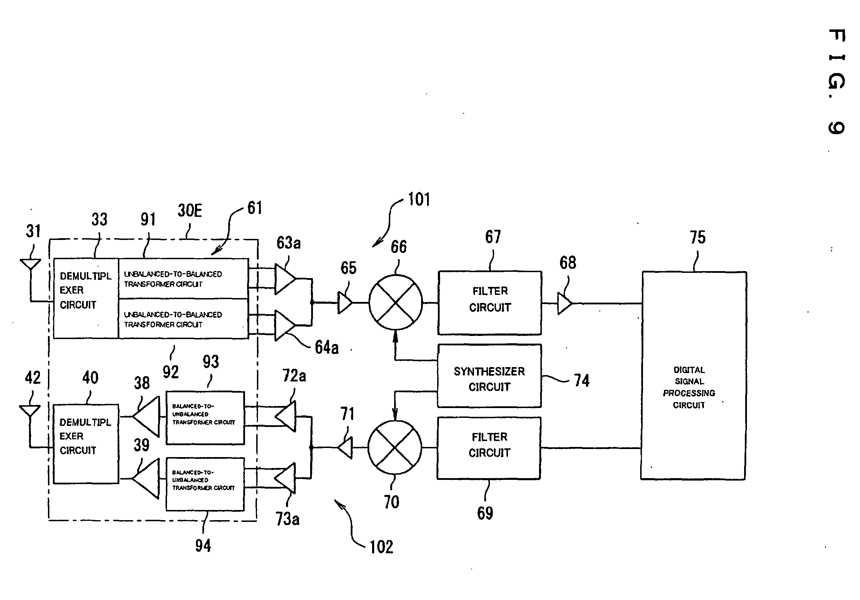

The configuration in a case where the high-frequency module 30E of the sixth embodiment configured as described above is adapted to a wireless communications apparatus for a wireless LAN will now be described with reference to FIG. 9.

As is shown in FIG. 9, the wireless communications apparatus includes a reception portion 101 and a transmission portion 102, and the high-frequency module 30E forms part of the reception portion 101 and part of the transmission portion 102.

The reception portion 101 is able to process reception signals in both the 2.4 GHz band and the 5 GHz band. Hence, as is shown in FIG. 9, the reception portion 101 includes a reception antenna 31, a demultiplexer circuit 33, unbalanced-to-balanced transformer circuits 91 and 92, low-noise amplifier circuits 63a and 64a, a high-frequency amplifier circuit 65, a mixer circuit 66, a filter circuit 67, and an intermediate amplifier circuit 68.

Hence, in the reception portion 101, a reception signal is demultiplexed to a signal in the 2.4 GHz band and a signal in the 5 GHz band in the demultiplexer circuit 33, which are transformed to balanced signals in the corresponding unbalanced-to-balanced transformer circuits 91 and 92. The balanced signals are then subjected to differential amplification individually in the corresponding low-noise amplifier circuits 63a and 64a, and processed in the common circuits thereafter.

The transmission portion 102 is able to process transmission signals in both the 2.4 GHz band and the 5 GHz band. Hence, the transmission portion 102 includes a filter circuit 69, a mixer circuit 70, a high-frequency amplifier circuit 71, driver circuits 72a and 73a, balanced-to-unbalanced transformer circuits 93 and 94, power amplifier circuits 38 and 39, a demultiplexer circuit 40, and a transmission antenna 42.

Hence, in the transmission portion 102, a transmission signal in the 2.4 GHz band is made to a balanced signal through differential amplification in the driver circuit 72a, and the balanced signal is transformed to an unbalanced signal in the balanced-to-unbalanced transformer circuit 93 followed by amplification in the power amplifier circuit 38. On the other hand, a transmission signal in the 5 GHz band is made to a balanced signal through differential amplification in the driver circuit 73a, and the balanced signal is transformed to an unbalanced signal in the balanced-to-unbalanced transformer circuit 94 followed by amplification in the power amplifier circuit 39.

A synthesizer circuit 74 and a digital signal processing circuit 75 are used commonly by the reception portion 101 and the transmission portion 102.

In each of the embodiments above, the high-frequency module 30 may be configured in such a manner that a directional coupling circuit (not shown) to extract part of outputs of the power amplifier circuits 38 and 39 is provided between the power amplifier circuits 38 and 39 and the demultiplexer circuit 40 in the transmission portion 62, and the directional coupling circuit is provided inside the multi-layer substrate. When configured in this manner, transmission outputs can be monitored.

As has been described, according to the invention, the transmission/reception switching switches can be omitted. Hence, not only can a power loss associated with the switching switches be prevented, but also the module can be reduced in size.

## Claims

1. A high-frequency module (30) comprising:
a reception portion (61) that processes a reception signal received by a reception antenna (31); and
a transmission portion (62) that processes a transmission signal to be supplied to a transmission antenna (42),
said transmission portion includes plural power amplifier circuits (38, 39) that respectively amplify power of transmission signals in different frequency bands, and a first non-switching demultiplexer circuit (40) that supplies outputs of said power amplifier circuits to said transmission antenna, **characterized in that**
said reception portion includes a second non-switching demultiplexer circuit (33) that divides the reception signal to plural reception lines of which frequency bands are different from each other;
said second non-switching demultiplexer circuit included in said H reception portion, and said power amplifier circuits and said first non-switching demultiplexer circuit included in said transmission portion are provided inside a multi-layer substrate.

2. The high-frequency module according to Claim 1,
wherein:
said transmission portion further includes a directional coupling circuit, provided between said power amplifier circuits and said first non-switching demultiplexer circuit, to extract part of outputs of said power amplifier circuits; and
said directional coupling circuit is provided in said multi-layer substrate.

3. The high-frequency module according to Claim 1 or 2, wherein:
said reception portion includes plural said second non-switching demultiplexer circuits (83, 33), and each of said second non-switching demultiplexer circuits demultiplexes a reception signal from corresponding reception antenna.

4. The high-frequency module according to any of Claims 1 through 3, wherein:
said reception portion further includes said reception antenna; and
said reception antenna is provided in said multi-layer substrate.

5. The high-frequency module according to any of Claims 1 through 4, wherein:
said transmission portion further includes said transmission antenna; and
said transmission antenna is provided in said multi-layer substrate.

6. The high-frequency module according to any of Claims 1 through, **characterized in that**, wherein:
said reception portion further includes low-noise amplifier circuits (63, 64), provided at a following stage of said second non-switching demultiplexer circuit, to respectively amplify the reception signal demultiplexed in said second non-switching demultiplexer circuit; and
said low-noise amplifier circuits are provided in said multi-layer substrate.

7. The high-frequency module according to any of Claims 1 through 5, wherein:
said reception portion further includes unbalanced-to-balanced transformer circuits (91, 92), provided at a following stage of said second non-switching demultiplexer circuit, to respectively transform unbalanced reception signals demultiplexed in said second non-switching demultiplexer circuit to balanced signals; and
said unbalanced-to-balanced transformer circuits are provided in said multi-layer substrate.

8. The high-frequency module according to any of Claims 1 through 7, wherein:
said transmission portion further includes balanced-to-unbalanced transformer circuits (93, 94), provided at a preceding stage of said power amplifier circuits, to transform inputted balanced signals to unbalanced signals; and
said balanced-to-unbalanced transformer circuits are provided in said multi-layer substrate.

9. The high-frequency module according to any of Claims 1 through 8, wherein:
said multi-layer substrate comprises a low-temperature co-fired ceramics substrate.

## Patentansprüche

1. Hochfrequenzmodul (30), umfassend:
einen Empfangsabschnitt (61), der ein Empfangssignal verarbeitet, das von einer Empfangsantenne (31) erhalten wird; und
einen Sendeabschnitt (62), der ein Sendesignal verarbeitet, das zu einer Sendeantenne (42) geleitet wird;
wobei der Sendeabschnitt mehrere Leistungsverstärkungsschaltungen (38, 39) enthält, die jeweils die Leistung von Sendesignalen in verschiedenen Frequenzbänden verstärken, sowie eine erste Nicht-Schalt-Demultiplexerschaltung (40), die Ausgänge der Leistungsverstärkungsschaltung zu der Sendeantenne leitet, **dadurch gekennzeichnet, dass**
der Empfangsabschnitt eine zweite Nicht-Schalt-Demultiplexerschaltung (33) enthält, die das Empfangssignal in mehrere Empfangsleitungen teilt, deren Frequenzbänder sich voneinander unterscheiden;
die zweite Nicht-Schalt-Demultiplexerschaltung, die in dem Empfangsabschnitt enthalten ist, und die Leistungsverstärkungsschaltungen und die erste Nicht-Schalt-Demultiplexerschaltung, die in dem Sendeabschnitt enthalten sind, in einem mehrschichtigen Substrat bereitgestellt sind.

2. Hochfrequenzmodul nach Anspruch 1, wobei:
der Sendeabschnitt des Weiteren eine Richtkopplerschaltung enthält, die zwischen den Leistungsverstärkungsschaltungen und der ersten Nicht-Schalt-Demultiplexerschaltung bereitgestellt ist, um einen Teil der Ausgänge der Leistungsverstärkungsschaltungen zu extrahieren; und
die Richtkopplerschaltung in dem mehrschichtigen Substrat bereitgestellt ist.

3. Hochfrequenzmodul nach Anspruch 1 oder 2, wobei:
der Sendeabschnitt mehrere der zweiten Nicht-Schalt-Demultiplexerschaltungen (83, 33) enthält, und jede der zweiten Nicht-Schalt-Demultiplexerschaltungen ein Empfangssignal von entsprechenden Empfangsantennen demultiplexiert.

4. Hochfrequenzmodul nach einem der Ansprüche 1 bis 3, wobei:
der Empfangsabschnitt des Weiteren die Empfangsantenne enthält; und
die Empfangsantenne in dem mehrschichtigen Substrat bereitgestellt ist.

5. Hochfrequenzmodul nach einem der Ansprüche 1 bis 4, wobei:
der Sendeabschnitt des Weiteren die Sendeantenne enthält; und
die Sendeantenne in dem mehrschichtigen Substrat bereitgestellt ist.

6. Hochfrequenzmodul nach einem der Ansprüche 1 bis 4, wobei:
der Empfangsabschnitt des Weiteren rauscharme Verstärkungsschaltungen (63, 64) enthält, die in einer folgenden Stufe der zweiten Nicht-Schalt-Demultiplexerschaltung bereitgestellt sind, um jeweils das Empfangssignal zu verstärken, das in der zweiten Nicht-Schalt-Demultiplexerschaltung demultiplexiert wurde; und
die rauscharmen Verstärkungsschaltungen in dem mehrschichtigen Substrat bereitgestellt sind.

7. Hochfrequenzmodul nach einem der Ansprüche 1 bis 5, wobei:
der Empfangsabschnitt des Weiteren Unsymmetrie/Symmetrie-Transformatorschaltungen (91,92) enthält, die in einer folgenden Stufe der zweiten Nicht-Schalt-Demultiplexerschaltung bereitgestellt sind, um unsymmetrische Empfangssignale, die in der zweiten Nicht-Schalt-Demultiplexerschaltung demultiplexiert wurden, in symmetrische Signale umzuformen; und
die Unsymmetrie/Symmetrie-Transformatorschaltungen in dem mehrschichtigen Substrat bereitgestellt sind.

8. Hochfrequenzmodul nach einem der Ansprüche 1 bis 7, wobei:
der Sendeabschnitt des Weiteren Symmetrie/Unsymmetrie-Transformatorschaltungen (93,94) enthält, die in einer vorangehenden Stufe der Leistungsverstärkungsschaltungen bereitgestellt sind, um eingegebene symmetrische Signale in unsymmetrische Signale umzuformen; und
die Symmetrie/Unsymmetrie-Transformatorschaltungen in dem mehrschichtigen Substrat bereitgestellt sind.

9. Hochfrequenzmodul nach einem der Ansprüche 1 bis 8, wobei:
das mehrschichtige Substrat ein gesintertes Niedertemperatur-Keramiksubstrat umfasst.

## Revendications

1. Module à haute fréquence (30) comprenant :
une partie de réception (61) qui traite un signal de réception reçu par une antenne de réception (31) ; et
une partie d'émission (62) qui traite un signal d'émission à fournir à une antenne d'émission (42),
ladite partie d'émission incluant plusieurs circuits d'amplification de puissance (38, 39) qui amplifient respectivement la puissance des signaux d'émission dans différentes bandes de fréquence, et un premier circuit de démultiplexage de non commutation (40) qui fournit des sorties desdits circuits d'amplification de puissance à ladite antenne d'émission, **caractérisé en ce que**
ladite partie de réception comprend un deuxième circuit de démultiplexage de non commutation (33) qui divise le signal de réception en plusieurs lignes de réception dont les bandes de fréquence sont différentes les unes des autres;
ledit deuxième circuit de démultiplexage de non commutation inclus dans ladite partie de réception, et lesdits circuits d'amplification d'énergie et ledit premier circuit démultiplexeur de non commutation inclus dans ladite partie d'émission, étant fournis à l'intérieur d'un substrat multicouches.

2. Module à haute fréquence selon la revendication 1, avec lequel :
ladite partie d'émission comprend en outre un circuit de couplage directionnel, fournit entre lesdits circuits d'amplification de puissance et ledit premier circuit de démultiplexage de non commutation, afin d'extraire une partie des sorties desdits circuits d'amplification de puissance ; et
ledit circuit de couplage directionnel étant fournit dans ledit substrat multicouche.

3. Module à haute fréquence selon les revendications 1 ou 2, avec lequel :
ladite partie de réception comprend ladite pluralité desdits deuxièmes circuits de démultiplexage de non commutation (83, 53), et chacun desdits deuxièmes circuits de démultiplexage de non commutation (83, 53) assurant le démultiplexage d'un signal de réception provenant d'une antenne de réception correspondante.

4. Module à haute fréquence selon l'une quelconque des revendications 1 à 3, avec lequel :
ladite partie de réception comprend en outre ladite antenne de réception ; et
ladite antenne de réception étant fournie dans ledit substrat multicouche.

5. Module à haute fréquence selon l'une quelconque des revendications 1 à 4, avec lequel :
ladite partie d'émission comprend en outre ladite antenne d'émission ; et
ladite antenne d'émission étant fournie dans ledit substrat multicouche.

6. Module à haute fréquence selon l'une quelconque des revendications 1 à 4, avec lequel :
ladite partie de réception comprend en outre des circuits amplificateurs à faible bruit (63, 64) fournis au niveau d'un étage suivant dudit deuxième circuit de démultiplexage de non commutation, afin de respectivement amplifier le signal de réception démultiplexé dans ledit deuxième circuit de démultiplexage de non commutation ; et
lesdits circuits amplificateurs à faible bruit étant fournis dans ledit substrat multicouche.

7. Module à haute fréquence selon l'une quelconque des revendications 1 à 5, avec lequel :
ladite partie de réception comprend en outre des circuits de transformation de déséquilibre en équilibre (91, 92) fournis au niveau d'un étage suivant dudit deuxième circuit de démultiplexage de non commutation, afin de respectivement transformer des signaux de réception démultiplexés dans ledit deuxième circuit de démultiplexage de non commutation, en circuits équilibrés; et
lesdits circuits de transformation de déséquilibre en équilibre étant fournis dans ledit substrat multicouche.

8. Module à haute fréquence selon l'une quelconque des revendications 1 à 7, avec lequel :
ladite partie d'émission comprend en outre des circuits de transformation d'équilibre en déséquilibre (93, 94) fournis au niveau d'un étage précédant desdits circuits amplificateurs de puissance, afin de transformer des signaux équilibrés que l'on a fait entrer, en signaux non équilibrés ; et
lesdits circuits de transformation d'équilibre en déséquilibre étant fournis dans ledit substrat multicouche.

9. Module à haute fréquence selon l'une quelconque des revendications 1 à 8, avec lequel :
ledit substrat multicouche comprend un substrat en céramique cocuit à basse température.
